# EUROPÄISCHE PATENTSCHRIFT

(11) **EP 2 454 474 B1**
(45) Veröffentlichungstag und Bekanntmachung des Hinweises auf die Patenterteilung: **30.03.2016**
(21) Anmeldenummer: 10739482.7
(22) Anmeldetag: 15.06.2010
(51) Int. Cl.: F03D 1/06

(54) **ROTORBLATT EINER WINDENERGIEANLAGE, VERFAHREN ZUM FERTIGEN EINES ROTORBLATTES SOWIE GURTPAAR FÜR EIN ROTORBLATT**
ROTOR BLADE OF A WIND POWER INSTALLATION, METHOD OF FABRICATING A ROTOR BLADE AND PAIR OF STRAPS FOR A ROTOR BLADE
PALE ROTORIQUE D'UNE ÉOLIENNE, PROCÉDÉ DE PRODUCTION D'UNE PALE ROTORIQUE ET PAIRE DE COURROIES POUR UNE PALE ROTORIQUE

(30) Priorität: 13.07.2009 DE 102009033165
(43) Veröffentlichungstag der Anmeldung: 23.05.2012
(73) Patentinhaber: Senvion GmbH, 22297 Hamburg (DE)
(72) Erfinder: KONTIS, Mario, 24105 Kiel (DE); KULENKAMPFF, Jens, 24103 Kiel (DE)
(74) Vertreter: Seemann, Ralph
(86) Internationale Anmeldenummer: PCT/EP2010/003584
(87) Internationale Veröffentlichungsnummer: WO 2011/006562

(56) Entgegenhaltungen:
- WO-A2-01/46582
- WO-A2-2009/156105
- US-A1- 2009 070 977
- US-A1- 2009 162 208

## Beschreibung

Die Erfindung betrifft ein Rotorblatt einer Windenergieanlage, wobei das Rotorblatt eine Längserstreckung aufweist, die sich von einer Rotorblattwurzel im Wesentlichen zu einer Rotorblattspitze erstreckt, wobei wenigstens in einem Bereich des Rotorblatts ein aerodynamisches Querschnittsprofil vorgesehen ist, das eine Profilvorderkante (Nase) und eine Profilhinterkante aufweist, die über eine Saugseite und eine Druckseite des Querschnittsprofils verbunden sind.

Die Erfindung betrifft ferner ein Verfahren zum Fertigen eines entsprechenden Rotorblatts. Außerdem betrifft die Erfindung ein Gurtpaar zur Verwendung in einem Rotorblatt und ein Verfahren zum Fertigen eines Rotorblatts und eine Anordnung einer Fertigungsform für die Herstellung eines Gurtpaares zur Verwendung in einem Rotorblatt mit einem Zwischensteg.

Üblicherweise werden Rotorblätter für Windenergieanlagen in zwei Schalen gebaut, nämlich einer Schale auf der Saugseite des Rotorblatts und einer Schale auf der Druckseite des Rotorblatts und miteinander verklebt. Zwischen den Schalen befinden sich meistens zwei Stege oder Holme, die auf den Gurt für die Saugseite und den Gurt für die Druckseite geklebt werden und für Beulsicherheit im Blatt sorgen. Die Gurte sorgen insbesondere für eine Verwindungs- oder Biegesteifigkeit des Rotorblatts und stellen in Kombination mit den Stegen bzw. Holmen die Tragstruktur des Rotorblatts dar.

Insbesondere bei großen Rotorblättern ist die Herstellung der Rotorblätter zeitaufwändig und kostspielig. Aus diesem Grund werden derartige große Rotorblätter in mehreren Teilen als nur zwei Schalen hergestellt und dann verklebt. Hierdurch werden die Einzelteile kleiner, wodurch sich die Fertigungszeit und die Kosten durch mögliche Fertigungsfehler reduzieren. Hierzu wird beispielsweise auf die DE 31 13 079 A1 und die EP 1 965 074 A2 verwiesen.

Außerdem wird noch auf die WO 03/093672 A1 verwiesen, die ein Rotorblatt für Windenergieanlagen mit einer Schale offenbart, deren Profilquerschnitt gegen Biegung in Schlagrichtung durch sich in Bezug auf die Profilsehne des Rotorblattes paarweise gegenüberliegend vorgesehene Gurte und durch Stege zwischen diesen versteift ist, wobei die Gurte aus in Längsrichtung faserverstärktem Kunststoff bestehen und in Längsrichtung einen glasfaser- und einen karbonfaserverstärkten Abschnitt aufweisen.

US 2009/0162208 A1 offenbart ein Multisegmentrotorblatt einer Windenergieanlage mit einem Holm, der zwischen einem vorderen Bereich eines Segments und einem hinteren Bereich eines Segments des Rotorblattes angeordnet ist.

US 2009/0070977 A1 offenbart ein Verfahren und eine Vorrichtung zum Zusammenbauen eines Rotorblattes einer Windenergieanlage, bei der ein gesamter Holm des Rotorblattes eingebracht wird.

WO 01/46582 A2 offenbart ein Rotorblatt für eine Windenergieanlage, das aus einer Mehrzahl von Segmentelementen besteht, die an einem lastübertragenden Holmkasten angesetzt sind.

WO 2009/156105 A2 offenbart ein Verfahren und eine Fertigungsform zur Fertigung eines Rotorblattes für eine Windenergieanlage.

Es ist Aufgabe der vorliegenden Erfindung, ein einfach und präzise als auch kostengünstig zu fertigendes Rotorblatt und Gurtpaar, ein entsprechendes Verfahren zum Fertigen dieses Rotorblatts und eine entsprechende Anordnung einer Fertigungsform für die Herstellung eines Gurtpaares zur Verwendung in einem entsprechenden Rotorblatt mit einem Zwischensteg anzugeben.

Gelöst wird diese Aufgabe durch ein Rotorblatt einer Windenergieanlage, wobei das Rotorblatt eine Längserstreckung aufweist, die sich von einer Rotorblattwurzel im Wesentlichen zu einer Rotorblattspitze erstreckt, wobei wenigstens in einem Bereich des Rotorblatts ein aerodynamisches Querschnittsprofil vorgesehen ist, das eine Profilvorderkante (Nase) und eine Profilhinterkante aufweist, die über eine Saugseite und eine Druckseite des Querschnittsprofils verbunden sind, das dadurch weitergebildet ist, dass das Rotorblatt wenigstens in einem längserstreckten Abschnitt in einen vorderen Rotorblattabschnitt mit der Profilvorderkante und einen hinteren Rotorblattabschnitt mit der Profilhinterkante unterteilt ist, wobei der hintere Bereich des vorderen Rotorblattabschnitts und der angrenzende Vorderbereich des hinteren Rotorblattabschnitts durch wenigstens zwei Gurte verbunden sind, die in einem Fügebereich, der in Längserstreckung des Rotorblatts verläuft, eine form- und/oder kraftschlüssige und stoffschlüssige Verbindung aufweisen, wobei zwei Gurte nebeneinander angeordnet sind, wobei die Gurte im Fügebereich Bereiche aufweisen, die quer zur Längserstreckung des Rotorblatts überlappend sind.

Vorzugsweise ist im Rahmen der Erfindung ein Gurt ein wesentliches tragendes Element eines Rotorblatts, das ausgebildet ist, um Schlagkräfte, Drehmomente und/oder Biegekräfte aufzunehmen. Bei einem Gurt handelt es sich insbesondere um ein glaserfaserverstärktes Kunststoffgelege, das mit mehreren Lagen, insbesondere aus Glasfasermatten alleine oder in Kombination mit Aramidfasermatten oder Kohlefasermatten, zu einer entsprechenden Stabilität in Verbindung mit einem Polyesterharz oder beispielsweise einem Epoxidharz führt. Die Dicke eines Gurtes hängt von der Blattlänge und den für einen Standpunkt berechneten Belastungsparametern ab. Die Dicke kann somit im Bereich von 2 cm bis 10 cm sein. Entsprechend ist die Breite eines Gurtes im Bereich von 5 cm bis 50 cm. Zwei Gurte, die zusammen ein Gurtpaar bilden, können dann eine Breite bis zu 1 m aufweisen.

Die Lösung der Erfindung kann vorzugsweise mit einer weiteren Erfindung kombiniert werden, die in einer parallelen Patentanmeldung am selben Tag wie die vorliegende Patentanmeldung beim Deutschen Patent- und Markenamt eingereicht wurde und den Titel "Rotorblatt einer Windenergieanlage sowie Verfahren zum Fertigen eines Rotorblattes einer Windenergieanlage" trägt. Hierzu ist vorzugsweise das Rotorblatt wenigstens in einem längserstreckten Abschnitt in einen vorderen Rotorblattabschnitt mit der Profilvorderkante und einen hinteren Rotorblattabschnitt mit der Profilhinterkante unterteilt, wobei der hintere Bereich des vorderen Rotorblattabschnitts und der angrenzende Vorderbereich des hinteren Rotorblattabschnitts durch einen I-Träger verbunden sind.

Durch Vorsehen eines I-Trägers, der im Rahmen der Erfindung insbesondere auch als Doppel-T-Träger bezeichnet werden kann, ist eine sehr effiziente und kostengünstige Herstellung eines entsprechenden Rotorblatts möglich. Hierbei kann das Rotorblatt in zwei Hälften vorgefertigt sein und die Verbindung, insbesondere Verklebung von aneinandergrenzenden Stegen, die sich von einer Saugseite zu einer Druckseite erstrecken und die insbesondere mit jeweiligen Gurten zu einem I-Träger verbunden sind, zu einer hohen Stabilität beitragen. Hierbei ist überraschenderweise festgestellt worden, dass ein Bauteil, das zur Stabilisierung bzw. Festigkeit des Rotorblatts beiträgt und als wesentlicher Bestandteil tragende Funktion hat, zunächst in der Fertigung des Rotorblatts geteilt sein kann und durch entsprechende Verbindung der Teile der tragenden Struktur, insbesondere Verklebung, eine immer noch ausreichende Stabilität bzw. vorzugsweise sogar eine erhöhte Stabilität erzeugt wird.

Die Längserstreckung, die sich von einer Rotorblattwurzel im Wesentlichen zu einer Rotorblattspitze erstreckt, bedeutet insbesondere, dass die Längserstreckung nicht notwendigerweise genau zur Rotorblattspitze vorliegen muss; sie kann auch in einem Winkel versetzt angeordnet sein, so dass die Längserstreckung von der Rotorblattwurzel in einem Winkel zu einer Längserstreckung, die zur Rotorblattspitze ginge, liegt. Der Winkel kann hierbei beispielsweise zwischen - 5° und 5° liegen. Der Winkel kann auch so groß sein, dass bei einer Rotorblattfertigung, bei der eine vorgefertigte Rotorblattspitze mit einer Erstreckung in Längsrichtung von bis zu 5 m an das restliche Teilblatt angebracht wird, beispielsweise die Längserstreckung zur Hinterkante oder Vorderkante an der Nahtstelle zur Fügekante des Teilblattes zur Rotorblattspitze liegen kann. Besonders bevorzugt ist, wenn in Längserstreckung von der Rotorblattwurzel zur Rotorblattspitze eine Verschiebung zur Vorderkante oder Hinterkante des Rotorblatts von 200 mm bis 300 mm von der Rotorblattspitze vorgesehen ist, so dass sich ein entsprechender Winkel der Längserstreckung zu einer gedachten Längserstreckung von der Rotorblattwurzel zur Rotorblattspitze ergibt.

Vorzugsweise weist der I -Träger einen Steg auf, der sich innerhalb des Rotorblatts von der Druckseite zur Saugseite erstreckt und außerdem einen Gurt an der Druckseite sowie einen Gurt an der Saugseite. Der Gurt ist hierbei vorzugsweise innerhalb des Rotorblatts angebracht und mit einer außen liegenden Verschalung verbunden.

Vorzugsweise umfasst der Steg Stegfüße, die mit dem Steg eine Form einer eckigen Klammer oder eine Form eines Z ausbilden.

Eine besonders einfache und effiziente Fertigung ist gegeben, wenn der I-Träger in Längserstreckung geteilt ist. Vorzugsweise sind die I-Trägerteile miteinander verbunden, insbesondere verklebt. Vorzugsweise weist der I-Träger I-Trägerteile auf, die einen Steg umfassen, wobei der I-Träger in Längserstreckung und flächig, insbesondere in einer Ebene, die durch den Steg definiert ist, geteilt ist. Der Steg ist hierbei ein im Wesentlichen flächiges Bauelement, wobei die Ebene der Teilung mitten durch den Steg hindurchgeht, und zwar im Wesentlichen parallel zu den Seitenflächen des Stegs. Durch die Verklebung, die insbesondere auch unter Zuhilfenahme von Glasfasern geschehen kann und beispielsweise mit einer Kunststofftechnik unter Verwendung wenigstens eines Harzes und wenigstens einer Faserlage, insbesondere Glasfasern und/oder Kohlefasern und/oder Aramidfasern geschieht, kann ein Verkleben, beispielsweise mit einer Spritz-Press-Technik, einer Infusionstechnik oder eine vakuumunterstützten Infusionstechnik geschehen.

Wenn vorzugsweise zur Saugseite und zur Druckseite hin jeweils zwei Gurte den I-Träger abschließen, die einen Abstand voneinander aufweisen, der kleiner als die Erstreckung der Gurte in Richtung von der Profilvorderkante zur Profilhinterkante des Rotorblatts ist, ist eine besonders stabile Bauweise des Rotorblatts möglich, wobei hierbei der Abstand der Gurte mit einem Verbindungsmittel wie eine Verklebung, beispielsweise aus einem Harz, ausgefüllt ist.

Vorzugsweise werden die beabstandeten Gurte auf der Saugseite und/oder auf der Druckseite durch Verklebung mit jeweils einem Stegfuß des Steges verbunden. Der Stegfuß hat dann eine entsprechende Erstreckung in Sehnenrichtung zwischen Profilvorderkante und Profilhinterkante bzw. eine annähernd tangentiale Erstreckung zu dem Profil im Bereich des Stegs, die eine ausreichende feste bzw. stabile Verbindung der Gurte sowohl auf der Druckseite als auch auf der Saugseite ermöglichen.

Vorzugsweise ist das Rotorblatt insbesondere während der Herstellung zusätzlich an der Profilvorderkante und/oder der Profilhinterkante geteilt. Hierdurch ergibt sich eine noch einfachere und genauere Fertigungsmöglichkeit des Rotorblatts. Zu einem entsprechenden Fertigungsverfahren und einer entsprechenden Fertigungsform, die dieses ermöglicht, wird vollumfänglich auf die Patentanmeldung der Patentanmelderin vom 12.08.2008 mit dem Titel "Verfahren und Fertigungsform zur Fertigung eines Rotorblatts für eine Windenergieanlage", mit dem Aktenzeichen DE 10 2008 038 620.0 verwiesen.

Vorzugsweise ist das erfindungsgemäße Rotorblatt so weitergebildet, dass zwei Gurte an der Saugseite und zwei Gurte an der Druckseite des Rotorblatts form- und/oder kraftschlüssig und stoffschlüssig miteinander verbunden sind. Hierbei ist diese Verbindung vorzugsweise entlang einer Fügefläche bzw. einer Stoßkante bzw. eines Fügebereichs in Längserstreckung des Rotorblatts vorgesehen. Im Rahmen der Erfindung umfassen der Begriff und Fügefläche und die Begriffe Fügekante, Stoßfläche, Stoßkante aneinander angrenzende Flächen oder sich gegenüberliegende Flächen, die miteinander verbunden werden oder sind.

Vorzugsweise verbindet wenigstens ein Steg die jeweils zwei Gurte miteinander, wobei die Verbindung entsprechend zwischen Saug- und Druckseite des Rotorblatts geschieht.

Erfindungsgemäß weisen die Gurte im Fügebereich Bereiche auf, die quer zur Längserstreckung des Rotorblattes überlappend sind. Hierunter ist insbesondere zu verstehen, dass ein Gurt, der neben einem anderen Gurt angeordnet ist, den anderen Gurt überlappt bzw. dass die beiden Gurte ineinander greifen.

Unter Fügebereich wird im Rahmen der Erfindung insbesondere eine Stoßkante, eine Berührungskante, ein Berührungsbereich, eine Berührungs- bzw. Stoßfläche verstanden.

Vorzugsweise sind die Gurte im Fügebereich formkomplementär, insbesondere in Form eines Schwalbenschwanzes, in Form einer Fase bzw. mit Fase, mit Nut und Feder und/oder gestuft ausgebildet. Hierdurch ergibt sich im Vergleich zu einer Fügefläche der Gurte, die senkrecht zur Längserstreckung ausgebildet sind, eine größere Verbindungsfläche, Fügefläche bzw. eine größere Fügekante, so dass eine Verbindung zwischen den Gurten erzeugt werden kann, die stabiler ist.

Vorzugsweise ist ein Überlappungselement vorgesehen, dass im Fügebereich quer zur Längserstreckung wenigstens über einen Teil der Gurte reicht. Das Überlappungselement kann auch als ein Gurt angesehen werden oder als ein Gurtverbinder. Das Überlappungselement ist entsprechend dann mit den Gurten verbunden, beispielsweise über eine Klebeverbindung.

Vorzugsweise ist das Überlappungselement fluchtend mit einer quer zur Stoßkante bzw. zur Fügekante der Gurte und quer zur Längserstreckung angeordneten Fläche der gefügten Gurte oder der Außenschale des Rotorblatts. Hierdurch wird die Aerodynamik des Rotorblatts nicht durch Kanten an der Oberfläche des Rotorblatts gestört. Vorzugsweise ist einer der zwei Gurte mit dem vorderen Rotorblattabschnitt verbunden und der andere der zwei Gurte mit dem hinteren Rotorblattabschnitt verbunden.

Es wird ferner ein Gurtpaar zur Verwendung in einem Rotorblatt in einer Windenergieanlage angegeben, wobei das Gurtpaar zwei nebeneinander angeordnete Gurte aufweist, die in dem Rotorblatt kraft- und/oder formschlüssig und stoffschlüssig in einem Fügebereich verbunden sind und wobei die Gurte des Gurtpaares die Kontur des Rotorblatts im Bereich des Gurtpaares aufweisen und sich wenigstens über die Länge eines Abschnitts in Längserstreckung des Rotorblatts erstrecken. Die Längserstreckung ist hierbei entsprechend der weiter oben schon angegebenen Definition. Diese ist üblicherweise ausgehend von einem Zentrum der Rotorblattwurzel anzunehmen. Die Längserstreckung kann allerdings auch deren Ausgangspunkt entfernt vom Zentrum der Rotorblatt-wurzel haben. Durch die kraft- und/oder formschlüssige Verbindung, die außerdem eine stoffschlüssige Verbindung ist, ist eine besonders stabile Verbindung der zwei Gurte in einem Gurtpaar möglich. Hierdurch ist die Fertigung entsprechender Rotorblätter, die ein solches Gurtpaar oder ggf. mehrere Gurtpaare aufweisen, sehr vereinfacht.

Die Gurte weisen im Fügebereich Bereiche bzw. Teile auf, die quer zur Längserstreckung des Rotorblatts überlappend sind. Vorzugsweise sind die Gurte im Fügebereich formkomplementär, insbesondere in Form eines Schwalbenschwanzes, mit Fase, mit Nut und Feder und/oder gestuft ausgebildet.

Vorzugsweise ist ein Überlappungselement vorgesehen, das beispielsweise auch als Gurt oder als Gurtverbinder bezeichnet werden kann, das im Fügebereich quer zur Längserstreckung wenigstens über einen Teil der Gurte reicht und insbesondere fluchtend mit dem Gurtpaar angeordnet ist. Die Gurte, die mit dem Überlappungselement insbesondere auch zusätzlich verbunden werden, weisen dann entsprechende Aussparungen auf, in die das Überlappungselement hineinpasst.

Der geteilte Gurt bzw. die Gurte des Gurtpaares haben hierbei im Wesentlichen die Kontur des Rotorblatts in dem Bereich, in dem der jeweilige Gurt im Rotorblatt angeordnet ist, d.h., der geteilte Gurt bzw. das Gurtpaar ist entsprechend in längsaxialer Richtung oder in Längserstreckung gekrümmt und verwunden, wobei die Verwindung insbesondere eine Art Verwringung um die Längsachse bzw. um die Längserstreckung darstellt und die Krümmung insbesondere eine Art Verbiegung des Rotorblatts zur Längsachse ist. Der geteilte Gurt ist somit entsprechend vorzugsweise "geflext" und "getwistet".

Die Teilung des Gurts bzw. das Vorsehen eines Gurtpaares ist insbesondere so zu verstehen, dass von der Rotorblattvorderkante zur Rotorblatthinterkante eine entsprechende Beabstandung vorgesehen ist. Alternativ kann der geteilte Gurt auch als zwei nebeneinander angeordnete Gurte verstanden werden, deren Abstand vergleichsweise gering ist. Bei dem geteilten Gurt kann es sich somit auch um zwei nebeneinander angeordnete Gurte handeln, die insbesondere so ausgestaltet sind, dass diese die Belastung eines normalerweise verwendeten einzelnen Gurtes aushalten. Durch Verwendung eines geteilten Gurts bzw. von zwei nebeneinander angeordneten Gurten ist die Fertigungsgenauigkeit von Rotorblättern, die in Längserstreckung aus zwei Teilen bzw. Rotorblattabschnitten bestehen bzw. diese umfassen, besonders hoch. Die Gurte des Gurtpaares sind erfindungsgemäß in einem Fügebereich, der sich in Längserstreckung des Gurtpaares entsprechend der Längserstreckung des Rotorblatts erstreckt, miteinander verbunden.

Der geteilte Gurt bzw. das Gurtpaar ist vorzugsweise im Wesentlichen über die gesamte Längserstreckung des Rotorblatts vorgesehen.

Vorzugsweise ist mit den Gurtteilen ein Steg verbunden, insbesondere geklebt, der sich von der Saugseite zur Druckseite des Rotorblatts erstreckt, so dass der Steg mit den Gurtteilen einen I-Träger bildet. Hierdurch ist ein besonders stabiles Rotorblatt möglich.

Die Aufgabe wird ferner durch ein Verfahren zum Fertigen eines Rotorblatts einer Windenergieanlage gelöst, wobei das gefertigte Rotorblatt in seiner Längserstreckung die sich von einer Rotorblattwurzel im Wesentlichen zu einer Rotorblattspitze erstreckt, wenigstens einen Bereich aufweist, in der das Rotorblatt ein aerodynamisches Querschnittsprofil aufweist, das eine Profilvorderkante (Nase) und eine Profilhinterkante aufweist, die über eine Saugseite und eine Druckseite des Querschnittsprofils verbunden sind, mit den folgenden Verfahrensschritten:
- Vorsehen wenigstens zweier in Längsrichtung des Rotorblatts gefertigter und geteilter Rotorblattabschnitte, wobei die Teilung zwischen der Profilvorderkante und der Profilhinterkante angeordnet ist,
- Anbringen eines ersten Gurtes eines Gurtpaares in dem hinteren Bereich der Saugseite und/oder Druckseite eines vorderen Rotorblattabschnitts und eines zweiten Gurtes des Gurtpaares in den vorderen Bereich der Saugseite und/oder Druckseite eines hinteren Rotorblattabschnitts,
- Verbinden, insbesondere Verkleben, des ersten Gurtes mit dem zweiten Gurt in einem Fügebereich, wobei im Fügebereich die aneinandergrenzenden Fügeflächen der Gurte eines Gurtpaares formkomplementär sind, wobei die Gurte im Fügebereich Bereiche aufweisen, die quer zur Längserstreckung des Rotorblatts überlappend sind.

Unter Anbringen wird im Rahmen der Erfindung insbesondere auch ein Einbringen oder Aufbringen verstanden.

Vorzugsweise sind die Gurte des Gurtpaares vorgefertigt in einer erfindungsgemäßen Anordnung einer Fertigungsform mit einem Zwischensteg. Ferner sind zwei Gurtpaare vorgesehen, die zur Verbindung der in Längsrichtung des Rotorblatts gefertigten und geteilten Rotorblattabschnitte dienen. Die beiden Gurte des einen Gurtpaars sind entsprechend an der Saugseite der vorderen und hinteren Rotorblattabschnitte an dem jeweiligen Rand der Verschalung angeordnet und entsprechend die anderen beiden Gurte des zweiten Gurtpaares an der Druckseite auch an dem jeweiligen Rand der Verschalung, so dass nach Verbinden der Rotorblattabschnitte die entsprechenden Gurtfügeflächen bzw. Fügekanten ineinandergreifen können und entsprechend verbunden werden können, beispielsweise durch Kleben.

Bei der Fügefläche handelt es sich erfindungsgemäß auch um eine Fügekante bzw. ein Fügeprofil, die bzw. das im Fügebereich angeordnet ist. Entsprechend beinhalten diese Begriffe auch die Begriffe Stoßbereich, Berührungsbereich, Stoßkante, Berührungskante und ähnliches. Es wird entsprechend eine Fuge durch die jeweiligen Gurte eines Gurtpaares ausgebildet, die mit einem Verbindungsmittel, insbesondere Klebstoff, ausgefüllt werden.

Vorzugsweise weist das Verfahren die folgenden Verfahrensschritte auf:
- Auf- oder Einbringen eines sich im Wesentlichen von der Druckseite zu der Saugseite erstreckenden ersten Stegteils in einen ersten geteilten Rotorblattabschnitt und eines zweiten sich im Wesentlichen von der Druckseite zu der Saugseite erstreckenden Stegteils in einen zweiten geteilten Rotorblattabschnitt und
- Verbinden, insbesondere Verkleben, des ersten Stegteils mit dem zweiten Stegteil, so dass sich ein Doppelsteg bildet.

Durch Herstellen eines Doppelstegs wird die Stabilität des Stegs schon erhöht. Das Auf- oder Einbringen eines sich im Wesentlichen von der Druckseite zur Saugseite erstreckenden ersten Stegteils in einen ersten geteilten Rotorblattabschnitt und einen zweiten sich im Wesentlichen von der Druckseite zur Saugseite erstreckenden Stegteils in einen zweiten geteilten Rotorblattabschnitt beinhaltet das Auf- oder Einbringen dieser jeweiligen Stegteile ins Innere der Rotorblattabschnitte, so dass diese an die Innenwandung der Rotorblattabschnitte bzw. eines dort angeordneten Gurtes angebracht werden. Unter Auf- oder Einbringen wird auch Anbringen verstanden.

Vorzugsweise umfasst das Auf- oder Einbringen des ersten und des zweiten Stegteils ein Verbinden, insbesondere Ankleben, des ersten und zweiten Stegteils an jeweils einen Gurt an der Druckseite und einen Gurt an der Saugseite je Rotorblattabschnitt.

Durch das Verbinden, insbesondere Verkleben, des ersten, insbesondere eckige Klammer förmigen, Stegteils mit dem zweiten, insbesondere eckige Klammer förmigen, Stegteil bildet sich vorzugsweise ein I-Träger, umfassend wenigstens vier Gurte und einen Doppelsteg. Hierdurch ist es besonders einfach, die beiden Rotorblattabschnitte miteinander zu verbinden, so dass sich eine sehr stabile Struktur ergibt.

Vorzugsweise ist das Verfahren zum Fertigen eines Rotorblatts einer Windenergieanlage durch die folgenden Verfahrensschritte weitergebildet:
- Auf- oder Einbringen eines sich im Wesentlichen von der Druckseite zu der Saugseite erstreckenden Stegs, der wenigstens zwei Stegfüße aufweist, in einen ersten geteilten Rotorblattabschnitt, so dass ein Teil der Stegfüße aus dem Rotorblattabschnitt herausragt,
- Verbinden, insbesondere Verkleben der herausragenden Teile der Stegfüße mit einem zweiten geteilten Rotorblattabschnitt.

Vorzugsweise bildet sich durch das Verbinden, insbesondere Verkleben des Stegs mit den Rotorblattabschnitten ein I-Träger, umfassend vier Gurte und den Steg. Unter dem Begriff Auf- oder Einbringung kann auch ein Anbringen zu verstehen sein.

Bei der Herstellung des Rotorblatts können vorzugsweise ein Rotorblattspitzenbereich und/oder eine Rotorblattwurzel als vorgefertigter Einsatz vorgesehen sein, die jeweils in Längserstreckung nicht notwendigerweise geteilt sein müssen. Die Längserstreckung dieser vorgefertigten Einsatzteile kann sich von wenigen Zentimetern bis zu 5 m erstrecken.

Vorzugsweise werden zum Vorsehen von zwei in Längserstreckung des Rotorblatts gefertigter und geteilter Rotorblattabschnitte wenigstens bei einem Rotorblattabschnitt ein Saugseitenabschnitt und ein Druckseitenabschnitt miteinander verbunden, insbesondere verklebt.

Vorzugsweise bilden die beiden Rotorblattabschnitte einen Nasenkasten und/oder einen Endkasten eines Rotorblatts.

Vorzugsweise wird zum Vorsehen von zwei in Längserstreckung des Rotorblatts gefertigter und geteilter Rotorblattabschnitte jeweils ein Gurt mit einer Saugseite und einer Druckseite jedes Rotorblattabschnitts verbunden, insbesondere verklebt.

Das erfindungsgemäße Verfahren und die Weiterbildungen des erfindungsgemäßen Verfahrens werden vorzugsweise in einer dafür vorgesehenen Fügevorrichtung durchgeführt, die ausgebildet ist, um mit entsprechenden Haltevorrichtungen die Rotorblattabschnitte bzw. Saugseitenabschnitte und Druckseitenabschnitte als auch Stege und ähnliches zu halten. Alternativ können diese Komponenten auch wenigstens zum Teil noch in einer Fertigungsform angeordnet bzw. gehalten sein. Eine entsprechende Fertigungsform ist in der oben genannten deutschen Patentanmeldung DE 10 2008 038 620.0 offenbart.

Erfindungsgemäß sind im Fügebereich die aneinandergrenzenden Flächen, die insbesondere als Stoßkanten, Stoßflächen oder Fügeflächen oder Fügekanten bezeichnet werden können, der Gurte eines Gurtpaares formkomplementär. Vorzugsweise ist das Verbinden ein unmittelbares Verbinden, insbesondere Verkleben, so dass zueinander angeordnete Flächen, wie die Fügeflächen der Gurte, zwischen sich nur ein Verbindungsmedium angeordnet haben, wie beispielsweise einen Klebstoff.

Durch ein Verfahren zum Herstellen eines Gurtpaares eines Rotorblatts einer Windenergieanlage, insbesondere zur Herstellung eines erfindungsgemäßen Rotorblatts, wobei das Gurtpaar in einer Fertigungsform hergestellt wird, die die Kontur des Rotorblattes im Bereich des Gurtpaares aufweist und sich wenigstens über die Länge eines Abschnitts des Rotorblatts, insbesondere in Längserstre-ckung, erstreckt, ist es möglich, sehr präzise ein Gurtpaar zur Verwendung in einem Rotorblatt herzustellen, das zum einen auf der Saugseite und/oder auf der Druckseite des Rotorblatts angeordnet ist und insbesondere dazu dient, Schalensegmente bzw. Rotorblattabschnitte oder Saugseiten- und Druckseitenabschnitte mit dem Gurtpaar zu verbinden, so dass eine sehr genaue Fertigung eines damit gefertigten Rotorblattes möglich ist. Insbesondere kann beim Einhalten eines vorzugsweise konstanten Abstandes zwischen dem Gurtpaar über die Länge des Abschnitts, insbesondere des aerodynamischen Bereichs, des Rotorblatts und vorzugsweise von der Blattwurzel bis zur Blattspitze oder im Wesentlichen von der Blattwurzel bis im Wesentlichen zur Blattspitze eine sehr hohe Fügegenauigkeit bzw. Verbindungsgenauigkeit gegeben sein.

Vorzugsweise erstreckt sich der Abschnitt von einem Bereich in der Nähe der Rotorblattwurzel bis zur Rotorblattspitze oder bis zu einem Abschnittsende des Rotorblatts in der Nähe der Rotorblattspitze. Hierbei ist insbesondere in der letzten Variante mit der Erstreckung bis zu einem Abschnittsende des Rotorblatts in der Nähe der Rotorblattspitze eine Fertigung des Rotorblatts vorgesehen, bei dem eine vorgefertigte Rotorblattspitze an einem längserstreckt geteilten Rotorblattabschnitt angebracht wird. Hierzu ist dann das Gurtpaar entsprechend der Abschnittslänge der geteilten Rotorblattabschnitte, und zwar in Längserstreckung geteilter Rotorblattabschnitte angepasst. Der vorgefertigte Rotorblattspitzenabschnitt bzw. die vorgefertigte Rotorblattspitze kann hierbei eine Länge von wenigen Zentimetern bis zu mehreren Metern, insbesondere von bis zu 5 m aufweisen.

Vorzugsweise ist ein Zwischensteg, insbesondere Mittelsteg, in der Fertigungsform vorgesehen, der entweder einstückig mit der Fertigungsform als Zwischensteg, insbesondere Mittelsteg, ausgebildet ist oder als ein herausnehmbarer Zwischensteg, insbesondere Mittelsteg, ausgebildet ist. Hierdurch kann sehr genau ein konstanter Abstand zwischen den Gurtpaaren erzielt werden. Im Rahmen der Erfindung beinhaltet der Begriff "Gurtpaar" auch zwei Gurte, die nebeneinander in einer Fertigungsform hergestellt werden oder auch den Begriff "in längsaxialer Richtung bzw. Längserstreckung des Rotorblatts geteilter Gurt".

Vorzugsweise weisen die Gurte eines Gurtpaares Aussparungen auf, in die ein Überlappungselement eingeklebt wird. Ferner vorzugsweise wird zwischen einem Gurt auf der Saugseite des Rotorblatts und einem Gurt auf der Druckseite des Rotorblatts ein Steg eingeklebt.

Ferner wird die Aufgabe durch die Anordnung einer Fertigungsform für die Herstellung eines Gurtpaares zur Verwendung in einem Rotorblatt mit einem Zwischensteg gelöst, die dadurch weitergebildet ist, dass die Fertigungsform die Kontur des Rotorblatts im Bereich des Gurtpaares auf der Saugseite oder der Druckseite des Rotorblatts aufweist und sich wenigstens über die Länge eines Abschnitts in Längserstreckung des Rotorblatts erstreckt, wobei der Zwischensteg vorgesehen ist, die Gurte bei der Fertigung zu trennen und gegenüber einem lediglich senkrecht zur Kontur angeordneten Zwischensteg eine größere Fügefläche der Gurte zueinander zu definieren.

Vorzugsweise ist zur Aufnahme des Zwischenstegs eine Nut in der Fertigungsform vorgesehen. Vorzugsweise weist der Zwischensteg eine Erstreckung auf, die bei den gefertigten Gurten eine Überlappung eines Teils der Gurte quer zur Längserstreckung der Fertigungsform hervorruft. Vorzugsweise erzeugt der Zwischensteg einen Schwalbenschwanz, eine Fase, eine Nut, eine Feder und/oder eine Stufe in den gefertigten Gurten, wobei wie gesagt die jeweils hervorgerufenen bzw. erzeugten geometrischen Formen der benachbarten Gurte eines Gurtpaares formkomplementär sind. Unter formkomplementär wird auch eine Form der zusammengehörenden Teile bzw. Gurte verstanden, die eine Fuge zwischen sich angeordnet haben, die entsprechend mit einem Verbindungsmittel, wie einem Klebstoff, gefüllt werden kann bzw. ist.

Nachfolgend wird die Erfindung anhand von Ausführungsbeispielen ohne Beschränkung des allgemeinen Erfindungsgedankens exemplarisch beschrieben, wobei bezüglich aller im Text nicht näher erläuterten erfindungsgemäßen Einzelheiten ausdrücklich auf die Figuren verwiesen wird. Es zeigen:
- Fig. 1: eine schematische Darstellung eines erfindungsgemäßen Rotorblatts einer Windenergieanlage,
- Fig. 2: eine schematische Darstellung eines weiteren erfindungsgemäßen Rotorblatts einer Windenergieanlage,
- Fig. 3: eine schematische Schnittdarstellung von entsprechenden Komponenten eines Rotorblatts in entsprechenden Fügevorrichtungen in einem fortgeschrittenen Stadium der Fertigung des Rotorblatts,
- Fig. 4: eine schematische Schnittdarstellung durch ein gefertigtes Gurtpaar in einem Rotorblatt,
- Fig. 5: eine schematische Schnittdarstellung durch ein gefertigtes Gurtpaar in einem Rotorblatt,
- Fig. 6: eine schematische Schnittdarstellung durch ein gefertigtes Gurtpaar in einem Rotorblatt,
- Fig. 7: eine schematische Schnittdarstellung durch ein gefertigtes Gurtpaar in einem Rotorblatt,
- Fig. 8: eine schematische Schnittdarstellung durch ein gefertigtes Gurtpaar in einem Rotorblatt,
- Fig. 9: eine schematische Schnittdarstellung durch ein gefertigtes Gurtpaar in einem Rotorblatt,
- Fig. 10: eine schematische Schnittdarstellung durch ein gefertigtes Gurtpaar in einem Rotorblatt,
- Fig. 11: eine schematische Schnittdarstellung eines erfindungsgemäßen Rotorblatts,
- Fig. 12: eine schematische Schnittdarstellung einer erfindungsgemäßen Anordnung einer Fertigungsform für die Herstellung eines Gurtpaares mit einem Zwischensteg,
- Fig. 13: eine weitere schematische Schnittdarstellung einer erfindungsgemäßen Anordnung einer Herstellungsform für die Herstellung eines Gurtpaares mit einem Zwischensteg.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

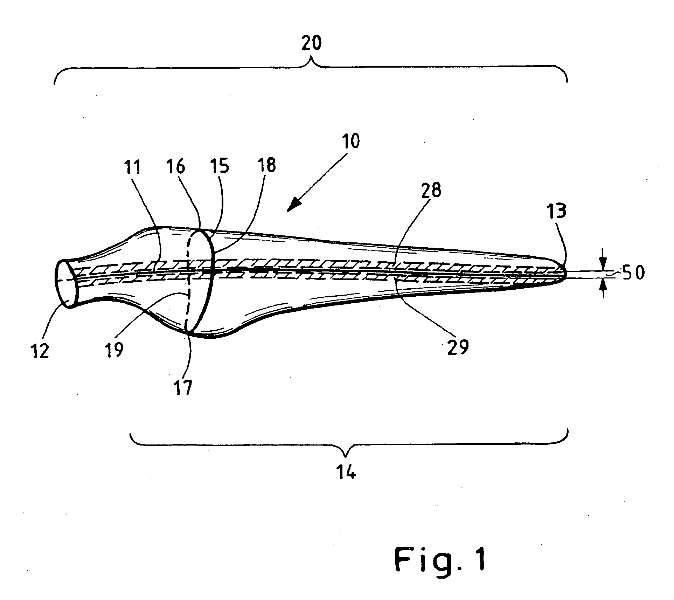

Fig. 1 zeigt schematisch ein erfindungsgemäßes Rotorblatt 10, das eine Längserstreckung 11 von, einer Rotorblattwurzel 12 zu einer Rotorblattspitze 13 aufweist. Im Rotorblatt 10 ist ein Querschnittsprofil 15 dargestellt, das aerodynamisch aktiv ist und eine Saugseite 18 sowie eine Druckseite 19 aufweist. Das aerodynamische Querschnittsprofil 15 weist ferner eine Profilvorderkante 16 (Nase) und eine Profilhinterkante 17 auf.

Ferner ist ein Gurtpaar bestehend aus den Gurten 28 und 29 schematisch dargestellt. Es ist ein Fügebereich 50 vorgesehen. Die Gurte 28 und 29 sind auf der Saugseite 18 angeordnet. Die Gurte 28 und 29 sind im Abschnitt 20 vorgesehen, d.h. in diesem Ausführungsbeispiel der Fig. 1 von der Blattwurzel 12 bis zur Rotorblattspitze 13. Nicht dargestellt ist ein entsprechendes Gurtpaar bestehend aus den Gurten 30 und 31 auf der Druckseite 19 des Rotorblatts 10. Es ist auch der aerodynamische Bereich 14 des Rotorblatts 10 angedeutet, der im Wesentlichen für den Auftrieb sorgt. Der Abschnitt 20 kann auch entsprechend kürzer sein, beispielsweise mit einem vorgebbaren ersten Abstand zur Rotorblattspitze 13 enden und/oder mit einem vorgebbaren zweiten Abstand zur Rotorblattwurzel 12. Im Bereich der in Fig. 1 dargestellten Längserstreckung 11 kann das Rotorblatt 10 bei der Herstellung geteilt sein. Ferner kann dieses auch an der Profilvorderkante 16 und der Profilhinterkante 17 geteilt sein.

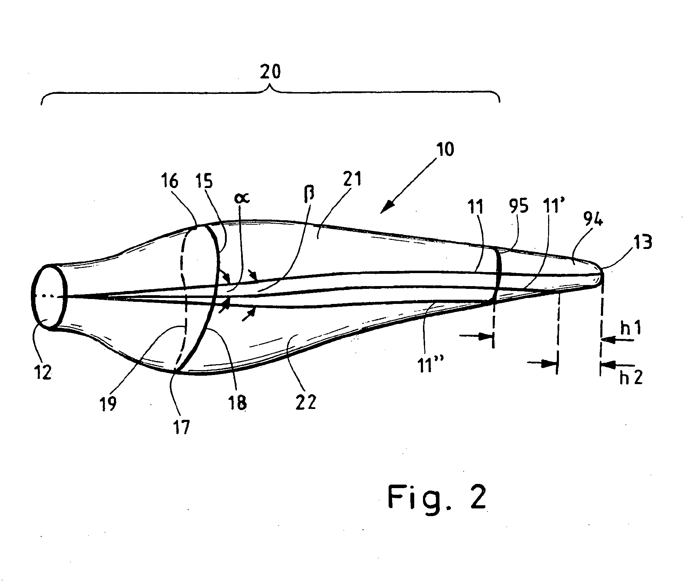

Fig. 2 zeigt ein schematisch dargestelltes erfindungsgemäßes Rotorblatt 10. Bei diesem Rotorblatt ist eine Längsteilung des Rotorblatts 10 in Rotorblattabschnitte 21 und 22 vorgesehen, wobei die Teilung entlang einer Längserstreckung 11 bzw. 11' oder 11" erfolgt. Die Längserstreckung 11 geht von der Rotorblattwurzel zur Rotorblattspitze 13. Die Längserstreckung 11' verläuft von der Rotorblattwurzel im Wesentlichen zur Rotorblattspitze 13 und endet im Bereich der Rotorblattspitze 13 in einem Abstand h2 von dieser Spitze. Entsprechend kann bei einer Teilung in Längserstreckung 11" diese bis zu einer Kante im Bereich der Rotorblattspitze 13 gehen, die eine Verbindungskante 95 zwischen einer vorgefertigten Rotorblattspitze und dem restlichen Rotorblatt bzw. Rotorblattabschnitt 20 darstellt. Die Rotorblattspitze muss in diesem Fall beispielsweise nicht in Längserstreckung geteilt sein.

Der Abstand zur Verbindungskante 95 ist mit h1 angegeben. Dieser kann bis zu 5 m sein. Es kann allerdings auch ein Abstand von wenigen Zentimetern vorgesehen sein. Der Rotorblattspitzenabschnitt 94 kann, wie gesagt, gesondert vorgefertigt werden. Entsprechend sind zwischen der Längserstreckung 11 zwischen der Rotorblattwurzel 12 und der Rotorblattspitze 13 Winkel α und β zur Längserstreckung 11' bzw. Längserstreckung 11" vorgesehen. α kann beispielsweise im Bereich von 0,1 bis 2° liegen und β im Bereich von 2° bis 5°.

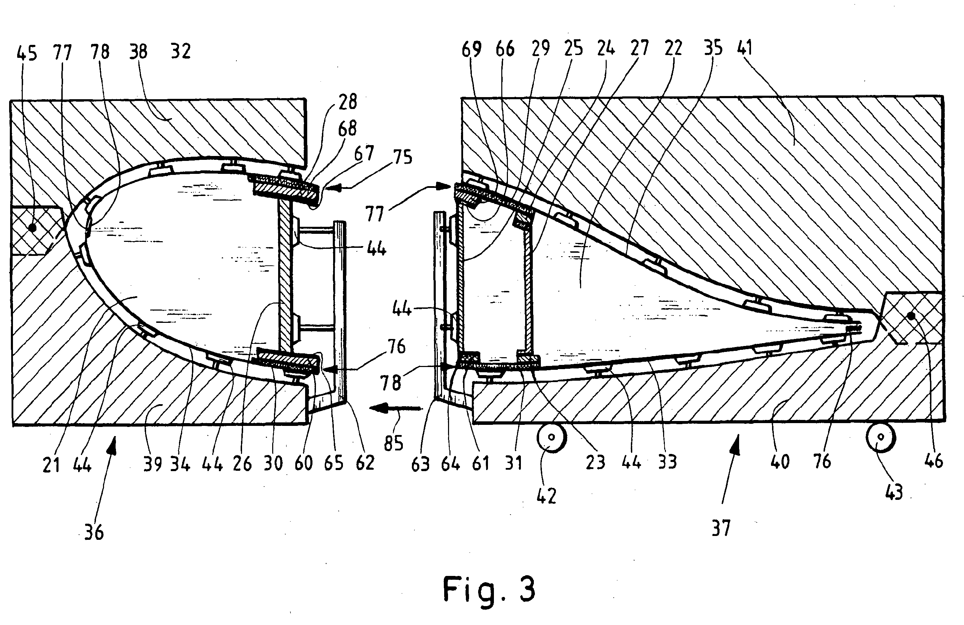

Fig. 3 zeigt eine Einrichtung zum Fertigen eines Rotorblatts 10, wobei zwei Fügevorrichtungen 36 und 37 vorgesehen sind, auf die Schalensegmente 32, 33, 34, 35 eines Rotorblatts 10 gehalten sind. Das Schalensegment 32 entspricht einer Rotorblattschale auf der Druckseite 19 zugehörig zu einem Vorderkasten bzw. einem Nasenkasten 21 und das Schalensegment 34 gehört zur Saugseite 18 des Vorderkastens bzw. des Nasenkastens 21. Es sind entsprechende Gurte 28 und 30 mit den Schalensegmenten 32 und 34 verbunden, insbesondere verklebt. Die Verklebung kann beispielsweise mit einem Harz realisiert sein. Die Schalensegmente 32 und 34 werden mittels einiger Saugelemente 44 unter Sauglufteinfluss in der Fügevorrichtung 36 fixiert. Entsprechend werden die Schalensegmente 33 und 35 durch Saugelemente 44 durch Saugluft in der Fügevorrichtung 37 fixiert.

Das Schalensegment 33 kann zur Saugseite eines Endkastens 23 gehören und das Schalensegment 35 zur Druckseite eines Endkastens 22. Die Schalensegmente 32 bis 35 können beispielsweise aus einem glasfaserverstärkten Gelege mit einem Harz, wie beispielsweise Epoxidharz, hergestellt sein. Die Rotorblattteile sind bevorzugt in einer Kunststofftechnik gefertigt. Vorzugsweise werden bei der Kunststofftechnik wenigstens ein Harz und wenigstens eine Faserlage, insbesondere aus Glasfasern und/oder Kohlefasern und/oder Aramid, wie insbesondere Kevlarfasern, verwendet. Zur Fertigung der Rotorblattschalensegmente 32-35 kann eine Spritz-Press-Technik (Resin Transfer Moulding; RTM) eine Infusionstechnik (Resin Infusion Moulding; RIM) verwendet werden, insbesondere eine durch Vakuum unterstützte Infusionstechnik (Vacuum Assisted Resin Infusion; VAR) und/oder eine Laminiertechnik verwendet werden, beispielsweise mit so genannten Prepregs. Die Fertigung der Rotorblattschalensegmente 32-35 ist in Fig. 3 schon vorher abgeschlossen gewesen, so dass die gefertigten Schalensegmente entsprechend auf die Fügevorrichtungen 36 und 37 aufgebracht bzw. in diese eingebracht werden.

Auch die auf den Schalensegmenten aufgebrachten bzw. mit diesen verbundenen bzw. verklebten Gurte 28-31 können in der Fertigung in einer Fertigungsform schon mit den Schalensegmenten verbunden worden sein.

Die Fügevorrichtungen 36 und 37 weisen jeweils Schwenkachsen 45 und 46 auf, um die die Schwenkteile 38-41 verschwenkt werden können.

In Fig. 3 ist ein fortgeschrittenes Stadium der Fertigung des erfindungsgemäßen Rotorblatts dargestellt. An einer präzise an das zweite Schwenkteil 39 angebrachten bzw. an diese justierte Positioniervorrichtung 62 ist über Saugelemente 44 ein Stegteil 26 fixiert. Das Stegteil 26 weist zur Saugseite 18 hin einen Stegfuß 65 auf und zur Druckseite 19 hin einen Stegfuß 67. Der Stegfuß 65 ist mittels einer Verklebung 60, beispielsweise aus einem Harz, mit dem Gurt 30 passgenau verklebt. Entsprechend ist eine Positioniervorrichtung 63 mit dem dritten Schwenkteil 40 verbunden oder an diesem justiert. An der Positioniervorrichtung 63 ist über Saugelemente 44 ein Stegteil 25 fixiert. Das Stegteil 25 hat Stegfüße 64 und 66. Der Stegfuß 65 ist über eine Verklebung 61 mit dem Gurt 31 verbunden. Auch hier ist eine passgenaue Justierung des Stegteils 27 mit dem Gurt 31 und dem Schalensegment 33 ermöglicht.

Vorher wurde schon ein Steg 27 entsprechend zwischen die Gurte 29 und 31 eingeklebt, und zwar über die Verklebung 23 und 24 an den Stegfüßen, die hier kein Bezugszeichen haben. Hierzu ist das Schwenkteil 41 schon entsprechend um die Schwenkachse 46 verschwenkt worden. Entsprechend ist dann auch, wie in Fig. 3 schon dargestellt ist, das erste Schwenkteil 38 um die Schwenkachse 45 verschwenkt worden, so dass eine Verklebung 68 des Stegfußes 67 mit dem Gurt 28 erfolgte. Auch dieses ist sehr passgenau möglich. Ferner findet eine Verklebung 77 des Schalensegments 32 mit dem Schalensegment 34 über ein mit dem Schalensegment 34 verbundenen Verklebungsteil 78 im Nasenbereich des Nasenkastens 21 statt.

Zur Herstellung eines Endkastens 22 wurde das vierte Schwenkteil 41 um die Schwenkachse 46 verschwenkt und auch der Stegfuß 66 mit einer Verklebung 69 mit dem Gurt 29 verklebt, so dass eine passgenaue Verklebung zwischen dem Steg 27 und dem Gurt 29 bzw. dem Schalensegment 35 erfolgt. Die Hinterkante des Rotorblatts wird auch über eine Verklebung 76 entsprechend verbunden.

Die Fügevorrichtungen 36 und 37 weisen vorzugsweise zusätzlich zu den Schwenkachsen 45 und 46 noch eine nicht dargestellte Linear-Stellvorrichtung auf, mit der die Formteile 38 und 39 bzw. 40 und 41, also die entsprechenden Schwenkteile 38 bis 41 in einer geradlinigen Bewegung geschlossen werden können.

Anschließend wird, wie der Pfeil 85 darstellt, die mit den Rädern 42 und 43 versehene Fügevorrichtung 37 in Richtung der Fügevorrichtung 36 verfahren, und zwar nach einem Abbinden der Verklebungen 60, 68, 77, 61, 69 und 76 und nach einem Entfernen der Positioniervorrichtungen 62 und 63.

Beide Rotorblattabschnitte in Form des Nasenkastens 21 und des Endkastens 22 werden dann an den Fügeflächen miteinander verklebt, so dass eine unmittelbare Verklebung der Gurte 28 bis 31 vorgenommen wird. Das Klebemedium kann ein Infusionsharz oder ein niedrigviskoses Klebeharz sein. Es kann auch zusätzlich noch ein Glasfasergewirr eingebracht sein. Die verbleibende Lücke, die sich durch das Verbindungsmedium zwischen den Gurten 28 bis 31 und den entsprechenden Schalen 32 bis 35 des Rotorblatts ergibt und auch durch die Dicke dieser Schalensegmente kann auch entsprechend durch das Klebemedium, beispielsweise Harz, ggf. ergänzt durch ein Glasfasergewirr bündig verschlossen werden.

Die Anordnung des Rotorblatts 10 bzw. der Rotorblattschalensegmente 32-35 mit den Saugseitenelementen nach unten ist nicht zwingend notwendig. Diese kann auch anders herum positioniert sein.

Um eine ausreichende Beulfestigkeit des hergestellten Rotorblattes 10 zu erreichen, kann das Blatt zusätzlich einen Hinterkantensteg aufweisen. Der Hinterkantensteg ist vorzugsweise im Endkasten 22 angeordnet und kann dort auf der Saugseite und/oder der Druckseite angeordnet sein und reicht beispielsweise bei einem 61m-Blatt von ca. 8m bis 52m gerechnet von der Rotorblattwurzel 12.

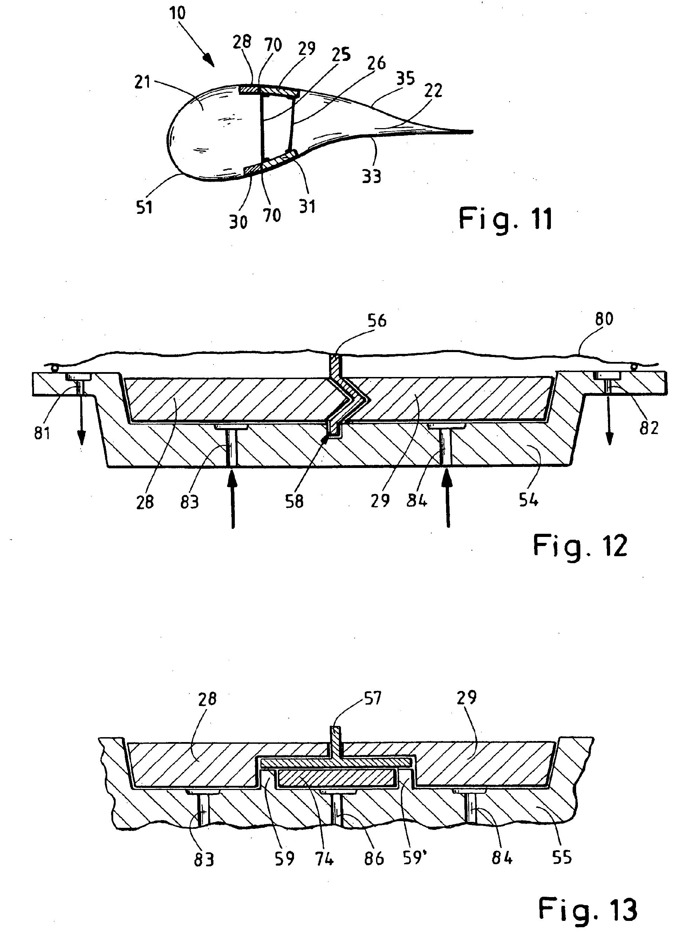

Die Fügevorrichtung 36, 37 wird bevorzugt verwendet, da so die Belegungszeit der Rotorblattherstellungsform reduziert wird. Die vier Schalensegmente 32 bis 35 werden entsprechend in den Schwenkteilen 38 bis 41 justiert. Die Verklebung der Stegteile 26 und 27 erfolgt insbesondere flächig. Die besonders genaue Positionierung und Justierung der Schalensegmente 32 bis 35 und der Stege 25, 26 und 27 erfolgen vorzugsweise durch die in Fig. 3 angedeuteten Positioniervorrichtung, die als Saugelemente 44 dargestellt sind und vorzugsweise in deren Höhe bzw. Beabstandung zu den Schwenkteilen verstellbar sind. Die sehr große Formgenauigkeit wird dadurch erzielt, dass die Gurte bzw. Gurtteile 28, 29 und 30, 31 jeweils zusammen, also die Gurte 28 und 29 zusammen und die Gurte 30 und 31 zusammen in einer Fertigungsform hergestellt werden. Hierzu sind in den Figuren 12 und 13 schematische Schnittdarstellungen entsprechender Fertigungsformen, in denen die entsprechenden Gurte 28 und 29, die hier als Beispiel dienen, gefertigt werden, dargestellt.

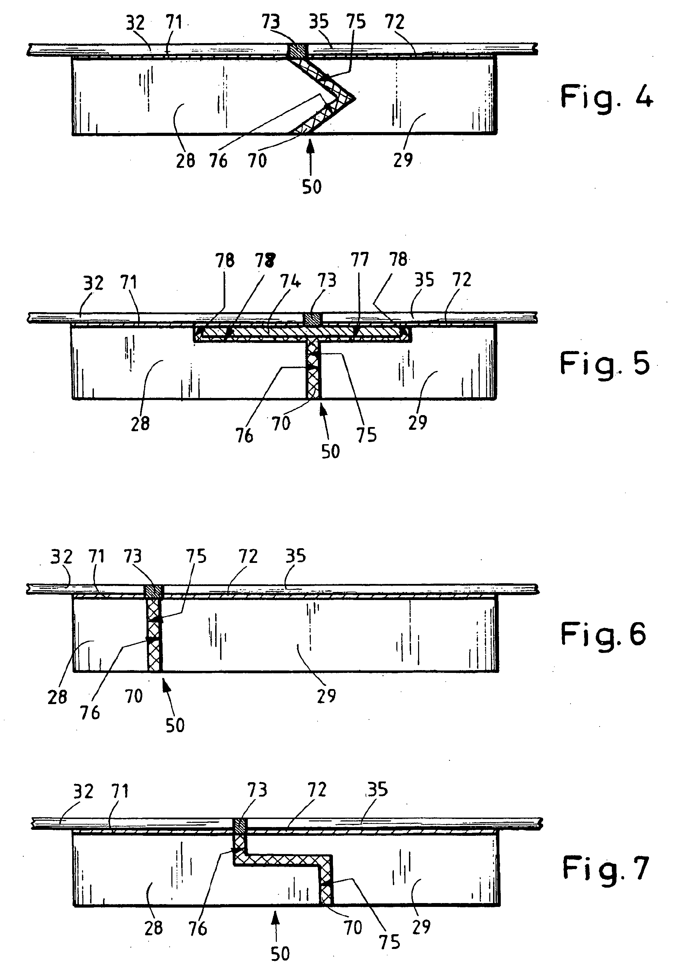

In den Fertigungsformen 54 und 55 sind entsprechend jeweils zwei Kavitäten für die herzustellenden Gurte 28 und 29 vorgesehen, die in der Mitte getrennt sind. Im Ausführungsbeispiel gemäß Fig. 12 geschieht die Trennung durch einen in einer Aussparung 58 einbringbaren Mittelsteg 56 und in der Ausführungsform gemäß Fig. 13 ist zusätzlich noch eine weitere Kavität vorgesehen, die durch Stege 59 und 59' und entsprechend einen Zwischensteg 57 abgegrenzt sind. In diesem Ausführungsbeispiel werden nicht nur zwei Gurte 28 und 29 gefertigt, die entsprechende Aussparungen aufweisen, sondern auch ein Gurtverbinder 74, der wie in Fig. 5 dargestellt ist, bei der Verbindung der Gurte 28 und 29 zusätzliche Haltekräfte hervorruft. Erfindungsgemäß ist eine entsprechende Anordnung einer Fertigungsform 54 bzw. 55 mit einem Zwischensteg 56 bzw. 57 vorgesehen, wobei der Zwischensteg 56 bzw. 57 eine erfindungsgemäße Form aufweist.

Bei Herstellung der Gurte 28 und 29 werden trockene Glasfasern in die Form eingelegt und durch einen Harzanguss durch die Harzangussanschlüsse 83, 84 und 86 in den Kavitäten mit einem Harz getränkt. Durch die formfeste Trennung bzw. die Fertigung der beiden Gurte 28 und 29 in einer einzigen Form passen die beiden Gurte 28 und 29 immer perfekt zueinander. Beide Gurte weisen eine identische Krümmung und Verwindung auf, die dem zu fertigenden Rotorblatt 10 im Bereich der jeweiligen Gurte entspricht. Die Fertigung der Gurte 28 und 29 geschieht in den Ausführungsbeispielen gemäß Fig. 12 und Fig.13 vorzugsweise mit einer vakuumunterstützen Infusionstechnik, wofür Harzangussanschlüsse 83 und 84 vorgesehen sind und Vakuumanschlüsse 81 und 82. Zur Abdichtung ist eine Vakuumfolie 80 vorgesehen, die links und rechts in den Figuren 12 und 13 mit Dichtleisten, die kein Bezugszeichen aufweisen und beispielsweise als Gummilippen ausgebildet sein können, mit den Fertigungsformen 54 bzw. 55 verbunden sind.

Bei der Ausführungsform gemäß Fig. 12 und 13 werden beide Gurte 28, 29 gemeinsam aus der Fertigungsform 54 bzw. 55 entformt und anschließend der Zwischensteg entfernt. Hierdurch können kleinere Ausrichtfehler des Zwischenstegs entstehen, die allerdings belanglos sind, da die beiden Gurthälften stets komplementär, also im Wesentlichen gleichförmig, ausgebildet sind.

In Fig. 13 wird gleichzeitig mit den Gurten 28 und 29 der Gurtverbinder 74 gefertigt, so dass auch dieser von der Form her komplementär zu den Gurthälften bzw. den Gurten 28 und 29 ist und damit an jeder Position des Abschnitts des Rotorblatts zu den Gurten 28 und 29 in die Aussparungen dort passt.

Die gemeinsame Fertigung von zwei Gurten in einer Fertigungsform spart Fertigungsplatz und Zeit bei der Fertigung. Außerdem können so hergestellte Gurte, die in Längserstreckung des Rotorblattes dann an einer Druckseite oder einer Saugseite jeweils verwendet werden, auch anstelle eines Steges, der die Gurte verbindet und der in der Mitte verklebt ist, also eines Doppelsteges, beispielsweise bei einer Verbindung mittels eines Kastenholmes gemäß der Patentanmeldung DE 10 2008 038 620.0 verwendet werden.

Durch die Erfindung ist eine kontrollierbare, prozesssichere und zugängliche Steg-zu-Schalen-Verklebung möglich. Durch eine großflächige Mittelstegverklebung bzw. Stegverklebung, durch die sich ein I-Träger bildet, können hohe Kräfte übertragen werden. Es ist ferner nicht nötig, einen externen Anpressdruck zum Verdrängen des Klebers zu verwenden, da die Stegteile 26 und 27 durch das angelegte Vakuum aufeinander gepresst werden. Die Stegteile an sich sind zugbelastbar, allerdings in sich relativ weich. Lokale Dickenunterschiede des Klebespaltes, also des Spaltes zwischen den Stegteilen 26 und 27, die durch Toleranzen der Klebeflächen bzw. der Stegflächen entstehen, werden durch das Vakuum auf die Dicke des Fließmediums nivelliert. Das Fließmedium stellt außerdem den Harzfluss durch die aufeinander gepressten Flächen sicher. Dieses ist am gefertigten Blatt nicht sichtbar.

Die Fig. 4 bis 10 zeigen verschieden Ausführungsformen der Verbindung zweier Gurte 28 und 29 eines Gurtpaares. Hierbei unterscheiden sich die Ausführungsformen durch unterschiedliche Ausgestaltungen der Fügeflächen bzw. Stoßflächen. Die Gurte 28 und 29 sind entsprechend an den Schalensegmenten 32 und 35 mit einer Verklebung 71 bzw. 72 angebracht. Im Fügebereich 50 findet eine Verklebung zwischen den Stoßkanten bzw. Fügekanten 75 und 76 der Gurte 28 und 29 statt. Außerdem wird oberhalb der Gurte der Bereich der Schalensegmente 32 und 35 auch mit einer Verklebung 73 versehen. Die Verklebung kann beispielsweise ein Harzanguss sein, der auch mit einem Fasergewirr versehen sein kann. Im Rahmen der Beschreibung zu den Figuren 4 bis 10 sind nur die Verbindungen der Gurte 28 und 29 auf einer Seite der Rotorblätter dargestellt. Die Ausführungsformen sind allerdings auch bei den anderen Gurten 30 und 31 vorgesehen.

In Fig. 4 ist schematisch eine Schwalbenschwanzverbindung dargestellt. Durch die Schwalbenschwanzverbindung wird eine größere Fügefläche bei der Verbindung erzielt als eine Fläche, wie sie beispielsweise in Fig. 6 dargestellt ist. Dieses führt zu erhöhter Stabilität der Verbindung.

In Fig. 5 ist eine Ausführungsform dargestellt, in der in den Gurten 28 und 29 eine Aussparung vorgesehen ist, in die ein Gurtverbinder 74 eingebracht ist. Entsprechend ist der Gurtverbinder 74 im Fügebereich angeordnet und verbindet die Gurte 28 und 29 auch an den entsprechenden Stoßkanten 75, 76 sowie 77 und 78.

In Fig. 6 ist eine weitere Ausführungsform einer entsprechenden Verbindung von Gurten 28 und 29 vorgesehen, wobei dieses Ausführungsbeispiel einen relativ breiten Gurt 29 und einen relativ schmalen Gurt 28 vorsieht. Diese Ausführungsform findet beispielsweise Anwendung, wenn ein relativ kleines Nasensegment an einen relativ großen Endkasten angebracht werden soll. Hierbei sind dann die Kräfte, die auf die Verbindungsstelle bzw. den Fügebereich 50 wirken, nicht so stark wie bei einer Aufteilung des Rotorblatts in ungefähr gleich große Abschnitte.

In Fig. 7 ist wieder eine Vergrößerung der Fügeflächen 75 und 76 dargestellt, die durch eine Art Nut- und Federverbindung bzw. eine teilweise Nut- und Federverbindung gegeben ist. Es könnte auch eine vollständige Nut- und Federverbindung dadurch gegeben sein, dadurch dass ein Zwischenteil eines Gurtes 28 beispielsweise vollständig in eine Aussparung des Gurtes 29 eingebracht wird, was allerdings in den Figuren nicht dargestellt ist.

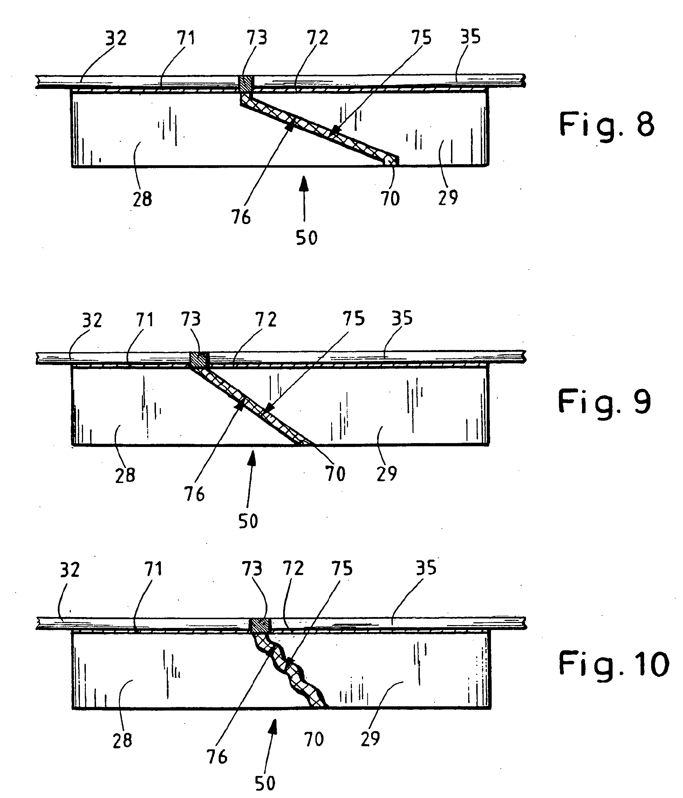

In den Fig. 8 und 9 sind im Fügebereich 50 die Fügeflächen angefast. Gemäß Fig. 8 sind die Fügeflächen 75 und 76 noch abgewinkelt und gemäß Fig. 9 bestehen diese ausschließlich aus einer Fase in einem vorbestimmbaren Winkel.

In Fig. 11 ist eine unregelmäßige bzw. gewundene Fügefläche 75 und 76 vorgesehen, wobei auch diese entsprechend formkomplementär zueinander sind.

Fig. 11 zeigt schematisch noch ein Ausführungsbeispiel, bei der der Endkasten eines im Schnitt dargestellten Rotorblatt 10 durch zwei Stege 25 und 26, die mit den Gurten 39 und 31 verklebt sind, ausgestaltet ist. Es bildet sich insofern ein Holmenkasten. Der Nasenkasten 21 soll relativ klein sein, so dass kein Steg zwischen den kleineren weniger breiten Gurten 28 und 30 notwendig ist.

### Bezugszeichenliste

- 10: Rotorblatt
- 11, 11', 11": Längserstreckung
- 12: Rotorblattwurzel
- 13: Rotorblattspitze
- 14: aerodynamischer Bereich
- 15: Querschnittsprofil
- 16: Profilvorderkante
- 17: Profilhinterkante
- 18: Saugseite
- 19: Druckseite
- 20: Abschnitt
- 21: Nasenkasten
- 22: Endkasten
- 23: Verklebung
- 24: Verklebung
- 25: Steg
- 26: Steg
- 27: Steg
- 28: Gurt
- 29: Gurt
- 30: Gurt
- 31: Gurt
- 32: Schalensegment
- 33: Schalensegment
- 34: Schalensegment
- 35: Schalensegment
- 36: Fügevorrichtung
- 37: Fügevorrichtung
- 38: erstes Schwenkteil
- 39: zweites Schwenkteil
- 40: drittes Schwenkteil
- 41: viertes Schwenkteil
- 42: Rad
- 43: Rad
- 44: Saugelement
- 45: Schwenkachse
- 46: Schwenkachse
- 47: Doppelsteg
- 50: Fügebereich
- 51: Nasensegment
- 54: Fertigungsform
- 55: Fertigungsform
- 56: Mittelsteg
- 57: Zwischensteg
- 58: Aussparung
- 59, 59': Steg
- 60: Verklebung
- 61: Verklebung
- 62: Positioniervorrichtung
- 63: Positioniervorrichtung
- 64-67: Stegfuß
- 68: Verklebung
- 69: Verklebung
- 70: Verklebung
- 71: Verklebung
- 72: Verklebung
- 73: Verklebung
- 74: Gurtverbinder
- 75: Fügefläche
- 76: Fügefläche
- 77: Fügefläche
- 78: Fügefläche
- 80: Vakuumfolie
- 81: Vakuumanschluss
- 82: Vakuumanschluss
- 83: Harzangussanschluss
- 84: Harzangussanschluss
- 85: Pfeil
- 86: Harzangussanschluss
- 94: Rotorblattspitzenabschnitt
- 95: Verbindungskante
- h1: Abstand
- h2: Abstand
- α: Winkel
- β: Winkel

## Patentansprüche

1. Rotorblatt (10) einer Windenergieanlage, wobei das Rotorblatt (10) eine Längserstreckung (11) aufweist, die sich von einer Rotorblattwurzel (12) im Wesentlichen zu einer Rotorblattspitze (13) erstreckt, wobei wenigstens in einem Bereich des Rotorblatts (10) ein aerodynamisches Querschnittsprofil (15) vorgesehen ist, das eine Profilvorderkante (16) (Nase) und eine Profilhinterkante (17) aufweist, die über eine Saugseite (18) und eine Druckseite (19) des Querschnittsprofils (15) verbunden sind, **dadurch gekennzeichnet, dass** das Rotorblatt (10) wenigstens in einem längserstreckten Abschnitt (20) in einen vorderen Rotorblattabschnitt (21) mit der Profilvorderkante (16) und einen hinteren Rotorblattabschnitt (22) mit der Profilhinterkante (17) unterteilt ist, wobei der hintere Bereich des vorderen Rotorblattabschnitts (21) und der angrenzende Vorderbereich des hinteren Rotorblattabschnitts (22) durch wenigstens zwei Gurte (28 - 31, 74) verbunden sind, die in einem Fügebereich (50), der in Längserstreckung (11, 11', 11") des Rotorblatts (10) verläuft, eine form- und/oder kraftschlüssige und stoffschlüssige Verbindung aufweisen, wobei zwei Gurte (28, 29, 30, 31) nebeneinander angeordnet sind, wobei die Gurte (28 - 31, 74) im Fügebereich (50) Bereiche aufweisen, die quer zur Längserstreckung (11, 11', 11") des Rotorblatts (10) überlappend sind.

2. Rotorblatt (10) nach Anspruch 1, **dadurch gekennzeichnet, dass** zwei Gurte (30, 31) an der Saugseite (18) und zwei Gurte (28, 29) an der Druckseite (19) des Rotorblatts (10) form- und/oder kraftschlüssig und stoffschlüssig miteinander verbunden sind, wobei insbesondere wenigstens ein Steg (25 - 27) die jeweils zwei Gurte (28 - 31) von der Druckseite (19) zur Saugseite (18) miteinander verbindet.

3. Rotorblatt (10) nach Anspruch 1 oder 2, **dadurch gekennzeichnet, dass** die Gurte (28 - 31, 74) im Fügebereich (50) formkomplementär, insbesondere in Form eines Schwalbenschwanzes, mit Fase, mit Nut und Feder und/oder gestuft ausgebildet sind.

4. Rotorblatt (10) nach einem der Ansprüche 1 bis 3, **dadurch gekennzeichnet, dass** ein Überlappungselement (74) vorgesehen ist, das im Fügebereich (50) quer zur Längserstreckung (11, 11', 11") wenigstens über einen Teil der Gurte (28 - 31) reicht, wobei insbesondere das Überlappungselement (74) fluchtend mit einer quer zur Fügefläche (75, 78) der Gurte (28 - 31) und quer zur Längserstreckung (11, 11', 11") angeordneten Fläche der gefügten Gurte (28 - 31) oder der Außenschale (32, 33, 34, 35) des Rotorblatts (10) ist, wobei insbesondere einer der zwei Gurte (28 - 30) mit dem vorderen Rotorblattabschnitt (21) verbunden ist und der andere der zwei Gurte (29 - 31) mit dem hinteren Rotorblattabschnitt (22) verbunden ist.

5. Verfahren zum Fertigen eines Rotorblatts (10) einer Windenergieanlage, wobei das gefertigte Rotorblatt (10) in seiner Längserstreckung (11), die sich von einer Rotorblattwurzel (12) im Wesentlichen zu einer Rotorblattspitze (13) erstreckt, wenigstens einen Bereich (14) aufweist, in der das Rotorblatt (10) ein aerodynamisches Querschnittsprofil (15) aufweist, das eine Profilvorderkante (16) (Nase) und eine Profilhinterkante (17) aufweist, die über eine Saugseite (18) und eine Druckseite (19) des Querschnittsprofils (15) verbunden sind, mit den folgenden Verfahrensschritten:
- Vorsehen wenigstens zweier in Längsrichtung (11) des Rotorblatts (10) gefertigter und geteilter Rotorblattabschnitte (21, 22), wobei die Teilung zwischen der Profilvorderkante (16) und der Profilhinterkante (17) angeordnet ist,
- Anbringen eines ersten Gurtes (28 - 31) eines Gurtpaares (28, 29; 30, 31) in den hinteren Bereich der Saugseite (18) und/oder Druckseite (19) eines vorderen Rotorblattabschnitts (21) und eines zweiten Gurtes (28 - 31) des Gurtpaares (28, 29; 30, 31) in den vorderen Bereich der Saugseite (18) und/oder Druckseite (19) eines hinteren Rotorblattabschnitts (22),
- Verbinden, insbesondere Verkleben, des ersten Gurtes (28, 30) mit dem zweiten Gurt (29, 31) in einem Fügebereich (50), wobei im Fügebereich (50) die aneinandergrenzenden Fügeflächen (75 - 78) der Gurte (28 - 31) eines Gurtpaares (28, 29; 30, 31) formkomplementär sind und wobei die Gurte im Fügebereich Bereiche aufweisen, die quer zur Längserstreckung des Rotorblattes überlappend sind.

6. Verfahren nach Anspruch 5, **dadurch gekennzeichnet, dass** das Verbinden ein unmittelbares Verbinden, insbesondere Verkleben ist, so dass zueinander angeordnete Fügeflächen (75 - 78) der Gurte (28 - 31) zwischen sich nur ein Verbindungsmedium (60, 61, 68, 69) angeordnet haben.

7. Verfahren nach Anspruch 5 oder 6, **dadurch gekennzeichnet, dass** die Gurte (28 - 31) eines Gurtpaares (28, 29; 30, 31) Aussparungen aufweisen, in die ein Überlappungselement (74) eingeklebt wird, wobei insbesondere zwischen einem Gurt (28 - 31) auf der Saugseite (18) des Rotorblatts (10) und einem Gurt (28 - 31) auf der Druckseite (19) des Rotorblatts (10) ein Steg (25 - 27) eingeklebt wird.

8. Anordnung einer Fertigungsform (54, 55) für die Herstellung eines Gurtpaares (28, 29; 30, 31), insbesondere nach einem der Ansprüche 5 bis 7, zur Verwendung in einem Rotorblatt (10), insbesondere nach einem der Ansprüche 1 bis 4, mit einem Zwischensteg (56, 57), **dadurch gekennzeichnet, dass** die Fertigungsform (54, 55) die Kontur des Rotorblatts (10) im Bereich des Gurtpaares (28, 29; 30, 31) auf der Saugseite (18) oder der Druckseite (19) des Rotorblatts (10) aufweist und sich wenigstens über die Länge (20) eines Abschnitts in Längserstreckung (11, 11', 11") des Rotorblatts (10) erstreckt, wobei der Zwischensteg (56, 57) vorgesehen ist, die Gurte (28 - 31) bei der Fertigung zu trennen und gegenüber einem lediglich senkrecht zur Kontur angeordneten Zwischensteg eine größere Fügefläche (75, 78) der Gurte (28 - 31) zueinander zu definieren.

9. Anordnung nach Anspruch 8, **dadurch gekennzeichnet, dass** zur Aufnahme des Zwischensteg (56, 57) eine Nut (58) in der Fertigungsform (54, 55) vorgesehen ist.

10. Anordnung nach Anspruch 8 oder 9, **dadurch gekennzeichnet, dass** der Zwischensteg (56, 57) eine Erstreckung aufweist, die bei den gefertigten Gurten (28 - 31) ein Überlappen eines Teils der Gurte (28 - 31) quer zur Längserstreckung (11, 11', 11") der Fertigungsform (54, 55) hervorruft.

11. Anordnung nach einem der Ansprüche 8 bis 10, **dadurch gekennzeichnet, dass** der Zwischensteg (56, 57) einen Schwalbenschwanz, eine Fase, eine Nut, eine Feder und/oder eine Stufe in den gefertigten Gurten erzeugt.

## Claims

1. A rotor blade (10) of a wind power installation, wherein the rotor blade (10) has a longitudinal extension (11) which extends from a rotor blade root (12) substantially to a rotor blade tip (13), wherein an aerodynamic cross-section profile (15) is provided at least in one area of the rotor blade (10), which has a profile front edge (16) (nose) and a profile rear edge (17), which are connected via a suction side (18) and a pressure side (19) of the cross-section profile (15), **characterised in that** the rotor blade (10) is divided into a front rotor blade section (21) with the profile front edge (16) and a rear rotor blade section (22) with the profile rear edge (17), at least in one longitudinally extended section (20), wherein the rear area of the front rotor blade section (21) and the adjacent front area of the rear rotor blade section (22) are connected by at least two girders (28-31, 74) which have a positive connection and/or non-positive connection and integral connection in a joining area (50) which runs in longitudinal extension (11, 11', 11") of the rotor blade (10), wherein two girders (28, 29, 30, 31) are arranged next to each other, wherein the girders (28-31, 74) have areas in the joining area (50), which are overlapping transverse to the longitudinal extension (11, 11', 11") of the rotor blade (10).

2. The rotor blade (10) according to claim 1, **characterised in that** two girders (30, 31) on the suction side (18) and two girders (28, 29) on the pressure side (19) of the rotor blade (10) are positively and/or non-positively and integrally connected to each other, wherein in particular at least one web (25-27) connects the two girders (28-31) respectively from the pressure side (19) to the suction side (18) to each other.

3. The rotor blade (10) according to claim 1 or 2, **characterised in that** the girders (28-31, 74) in the joining area (50) are formed complementary to their form, in particular in the form of a swallow tail, with chamfer, with groove and spring and/or stepped.

4. The rotor blade (10) according to one of claims 1 to 3, **characterised in that** an overlapping member (74) is provided, which, in the joining area (50) transverse to the longitudinal extension (11, 11', 11"), reaches over at least one part of the girders (28-31), wherein in particular the overlapping member (74) is aligned with a surface of the joined girders (28-31) or the outer shell (32, 33, 34, 35) of the rotor blade (10), arranged transverse to the joining surface (75,78) of the girders (28-31) and transverse to the longitudinal extension (11, 11', 11"), wherein in particular one of the two girders (28-30) is connected to the front rotor blade section (21) and the other of the two girders (29-31) to the rear rotor blade section (22).

5. A method of fabricating a rotor blade (10) of a wind power installation, wherein the fabricated rotor blade (10) has in its longitudinal extension (11), which extends from a rotor blade root (12) substantially to a rotor blade tip (13), at least one area (14) in which the rotor blade (10) has an aerodynamic cross-section profile (15) which has a profile front edge (16) (nose) and a profile rear edge (17), which are connected via a suction side (18) and a pressure side (19) of the cross-section profile (15), with the following method steps:
- Providing at least two rotor blade sections (21, 22) fabricated and divided in longitudinal direction (11) of the rotor blade (10), wherein the division is arranged between the profile front edge (16) and the profile rear edge (17),
- Fitting a first girder (28-31) of a pair of girders (28, 29; 30, 31) into the rear area of the suction side (18) and/or pressure side (19) of a front rotor blade section (21) and a second girder (28-31) of the pair of girders (28, 29; 30, 31) into the front area of the suction side (18) and/or pressure side (19) of a rear rotor blade section (22),
- Connecting, in particular adhering, the first girder (28, 30) to the second girder (29, 31) in a joining area (50), wherein, in the joining area (50), the joining surfaces (75-78) of the girders (28-31) of a pair of girders (28, 29; 30, 31), which are adjacent to each other, are complementary to their form and wherein the girders in the joining area have areas which are overlapping transverse to the longitudinal extension of the rotor blade.

6. The method according to claim 5, **characterised in that** the connection is a direct connection, in particular adhesion, so that joining surfaces (75-78) of the girders (28-31), which are arranged relative to each other, only have one connecting medium (60, 61, 68, 69) arranged between them.

7. The method according to claim 5 or 6, **characterised in that** the girders (28-31) of a pair of girders (28, 29; 30, 31) have recesses into which an overlapping member (74) is adhered, wherein in particular a web (25-27) is adhered between a girder (28-31) on the suction side (18) of the rotor blade (10) and a girder (28-31) on the pressure side (19) of the rotor blade (10).

8. An arrangement of a fabricating mould (54, 55) for manufacturing a pair of girders (28, 29; 30, 31) in particular according to one of claims 5 to 7, for use in a rotor blade (10), in particular according to one of claims 1 to 4, with an intermediate web (56, 57), **characterised in that** the fabricating mould (54, 55) has the contour of the rotor blade (10) in the area of the pair of girders (28, 29; 30, 31) on the suction side (18) or the pressure side (19) of the rotor blade (10) and extends at least over the length (20) of a section in longitudinal extension (11, 11', 11") of the rotor blade (10), wherein the intermediate web (56, 57) is provided to separate the girders (28-31) and to define, relative to each other, a larger joining surface (75, 78) of the girders (28-31) relative to an intermediate web, which is only arranged perpendicular to the contour, during the fabrication.

9. The arrangement according to claim 8, **characterised in that** a groove (58) for receiving the intermediate web (56, 57) is provided in the fabricating mould (54, 55).

10. The arrangement according to claim 8 or 9, **characterised in that** the intermediate web (56, 57) has an extension which, in the fabricated girders (28-31), produces an overlapping of a part of the girders (28-31) transverse to the longitudinal extension (11, 11', 11") of the fabricating mould (54, 55).

11. The arrangement according to one of claims 8 to 10, **characterised in that** the intermediate web (56, 57) creates a swallow tail, a chamfer, a groove, a spring and/or a step in the fabricated girders.

## Revendications

1. Pale de rotor (10) d'une éolienne, la pale de rotor (10) présentant une extension longitudinale (11) allant sensiblement depuis une racine de pale de rotor (12) jusqu'à une extrémité libre de pale de rotor (13), un profil de section transversale aérodynamique (15) étant aménagé au moins dans une zone de la pale de rotor (10), lequel présente un bord d'attaque (16) (nez), et un bord de fuite (17), qui sont reliés via un côté d'aspiration (18) et un côté de pression (19) du profil de section transversale (15), **caractérisé en ce que**, au moins dans une portion (20) s'étendant longitudinalement, la pale de rotor (10) est divisée en une portion avant (21) de pale de rotor ayant le bord d'attaque (16) et une portion arrière (22) de pale de rotor ayant le bord de fuite (17), la partie arrière de la portion avant (21) de pale de rotor et la partie avant adjacente de la portion arrière (22) de pale de rotor étant reliées par au moins deux bandes (28-31, 74), qui, dans une zone de liaison (50) s'étendant dans la direction longitudinale (11, 11', 11") de la pale de rotor (10), ont des zones de liaison venant en liaison par un engagement ajusté de formes et / ou par un engagement en force et engagement de matériaux, deux bandes (28, 29, 30, 31) étant disposées l'une à côté de l'autre, lesdites bandes (28 à 31, 74) se chevauchant dans la zone de jonction (50) par des parties qui sont transversales à l'extension longitudinale (11, 11', 11 ") de la pale de rotor (10).

2. Pale de rotor (10) selon la revendication 1, **caractérisé en ce que** deux bandes (30, 31) sur le côté d'aspiration (18) et deux bandes (28, 29) sur le côté de pression (19) de la pale de rotor (10) sont reliées les unes aux autres par un engagement ajusté de formes et/ou un engagement en force avec engagement de matériaux, en particulier au moins une nappe (25 à 27) reliant l'une à l'autre deux bandes (28-31) respectives depuis le côté de pression (19) vers le côté d'aspiration (18).

3. Pale de rotor (10) selon la revendication 1 ou la revendication 2, **caractérisé en ce que** les bandes (28 à 31, 74), dans la zone de jonction (50), sont conçues de façon à présenter des formes complémentaires, en particulier sous la forme d'une queue d'aronde, avec des chanfreinx, avec une rainure et une languette et / ou avec des décrochements.

4. Pale de rotor (10) selon l'une quelconque des revendications 1 à 3, **caractérisé en ce qu'**un élément de chevauchement (74) est prévu dans la zone de liaison (50) de façon à s'étendre transversalement à l'extension longitudinale (11, 11', 11") sur au moins une partie des bandes (28 à 31), en particulier, l'élément de chevauchement (74) est disposé en affleurement avec une surface des bandes (28-31) reliées, ou avec l'enveloppe extérieure (32, 33, 34, 35) de la pale de rotor (10) disposée transversalement par rapport à la surface de jonction (75, 78) des bandes reliées (28 à 31) et transversalement à l'extension longitudinale (11, 11', 11"), ou, dans lequel en particulier l'une des deux bandes (28 à 30) est reliée à la portion avant (21) de pale de rotor et l'autre des deux bandes (29 à 31) est reliée à la portion arrière (22) de pale de rotor.

5. Procédé de fabrication d'une pale de rotor (10) d'une installation éolienne, dans lequel la pale de rotor (10) fabriquée a, dans son extension longitudinale (11) s'étendant depuis une racine (12) de pale de rotor jusqu'à sensiblement une extrémité libre (13) de pale de rotor, au moins une zone (14) dans laquelle la pale de rotor (10) a un profil aérodynamique (15) en section transversale ayant un bord d'attaque (16) (nez), et un bord de fuite (17) qui sont reliés par un côté d'aspiration (18) et un côté de pression (19) du profil (15) en section transversale, le procédé comprenant les étapes suivantes :
- réaliser au moins deux portions de pale de rotor (21, 22) fabriquées et divisées dans le sens longitudinal (11) de la pale de rotor (10), la division se trouvant entre le bord d'attaque (16) et le bord de fuite (17),
- fixer une première bande (28 à 31) d'une paire de bandes (28, 29; 30, 31) dans la zone arrière du côté d'aspiration (18) et/ou du côté de pression (19) d'une portion avant (21) de pale et une deuxième bande (28 à 31) de la paire de bandes (28, 29; 30, 31) dans la zone avant du côté d'aspiration (18) et/ou du côté de pression (19) d'une portion arrière (22) de pale de rotor,
- relier, notamment par collage, la première bande (28, 30) à la deuxième bande (29, 31) dans une zone de jonction (50), les surfaces de jonction (75 à 78) réciproquement contiguës des bandes (28 à 31) d'une paire de bandes (28, 29; 30, 31) étant, dans la zone de jonction (50), de forme complémentaire, et les bandes comprennent des zones de jonction qui se chevauchent transversalement par rapport à l'extension longitudinale de la pale de rotor.

6. Procédé selon la revendication 5, **caractérisé en ce que** la liaison est une liaison directe, en particulier par collage, la liaison étant telle que les surfaces de liaison (75 à 78) des bandes (28 à 31) sont mutuellement agencées avec seulement un moyen de liaison (60, 61, 68, 69) disposé entre elles.

7. Procédé selon la revendication 5 ou la revendication 6, **caractérisé en ce que** les bandes (28 à 31) d'une paire de bandes (28, 29; 30, 31) présentent des évidements dans lesquels un élément de chevauchement (74) est collé, une âme (25 à 27) étant en particulier collée entre une bande (28 à 31) sur le côté d'aspiration (18) de la pale de rotor (10) et une bande (28 à 31) sur le côté de pression (19) de la pale de rotor (10).

8. Agencement d'un moule de production (54, 55) pour la fabrication d'une paire de bandes (28, 29; 30, 31), en particulier selon l'une des revendications 5 à 7, pour une utilisation pour une pale de rotor (10), en particulier selon l'une des revendications 1 à 4, avec une nappe intermédiaire (56, 57), **caractérisé en ce que** le moule de production (54, 55) a le contour de la pale de rotor (10) dans la zone de la paire de bandes (28, 29; 30, 31) sur le côté d'aspiration (18) ou le côté de pression (19) de la pale de rotor (10) et **en ce qu'**il s'étend au moins sur la longueur (20) d'une partie de l'étendue longitudinale (11, 11', 11") de la pale de rotor (10), la nappe intermédiaire (56, 57) étant prévue pour séparer les bandes (28 à 31) au cours de la fabrication et pour définir une plus grande surface de jonction (75, 78) des bandes (28 à 31) l'une à l'autre par rapport à une bande intermédiaire disposée simplement perpendiculairement au contour.

9. Agencement selon la revendication 8, **caractérisé en ce qu'**une rainure (58) est prévue dans le moule de fabrication (54, 55) pour recevoir la nappe intermédiaire (56, 57).

10. Agencement selon la revendication 8 ou la revendication 9, **caractérisé en ce que** la bande intermédiaire (56, 57) présente un prolongement qui permet un recouvrement d'une partie des bandes (28 à 31) transversalement à l'extension longitudinale (11, 11', 11") du moule de production (54, 55) des bandes (28 à 31) fabriquées.

11. Agencement selon l'une quelconque des revendications 8 à 10, **caractérisé en ce que** la bande intermédiaire (56, 57) aménage une queue d'aronde, un chanfrein, une rainure, une languette et / ou un décrochement dans les bandes finies.
